(19)

Europäisches Patentamt
European Patent Office
Office européen des brevets

(11) **EP 1 659 435 B1**

(12) **EUROPEAN PATENT SPECIFICATION**

(45) Date of publication and mention
of the grant of the patent:
**04.05.2011 Bulletin 2011/18**

(51) Int Cl.:
***G02B 7/00*** *(2006.01)* ***G03B 5/02*** *(2006.01)*
***G02B 27/64*** *(2006.01)*

(21) Application number: **05255802.0**

(22) Date of filing: **20.09.2005**

(54) **Actuator, lens unit and camera having the same**

Aktuator, Linseneinheit und Kamera die dergleichen verwendet

Actionneur, unité à lentilles et dispositif de prise de vue l'utilisant

(84) Designated Contracting States:
**DE FR GB**

(30) Priority: **19.11.2004 JP 2004336455**

(43) Date of publication of application:
**24.05.2006 Bulletin 2006/21**

(73) Proprietor: **Tamron Co., Ltd.**
**Saitama-shi,**
**Saitama-ken (JP)**

(72) Inventor: **Noji, Takayoshi c/o Tamron Co., Ltd.**
**Saitama-shi, Saitama-ken (JP)**

(74) Representative: **Skone James, Robert Edmund**
**Gill Jennings & Every LLP**
**The Broadgate Tower**
**20 Primrose Street**
**London EC2A 2ES (GB)**

(56) References cited:
**GB-A- 1 216 597    US-A1- 2002 112 543**

- **PATENT ABSTRACTS OF JAPAN vol. 011, no. 160 (M-592), 23 May 1987 (1987-05-23) & JP 61 294216 A (HITACHI LTD), 25 December 1986 (1986-12-25)**

**Description**

The present invention related to an actuator, a lens unit and a camera with a parallel movement apparatus capable of moving in a predetermined plane in a desired direction.

Japanese Patent Preliminary Publication No. H03-186823 (referred to as Patent Document 1 as listed below) discloses an anti-vibration device that is useful to avoid image shaking. The anti-vibration device detects vibration of a lens barrel and analyzes the detected vibration to actuate a correcting lens in a plane in parallel with the film so as not to cause image shaking. A parallel movement mechanism in this anti-vibration device, which translates the correcting lens in a predetermined plane, consists a fixture frame retaining the correcting lens stationary, a first holder frame slidably supporting the fixture frame in a first direction orthogonal to the optical axis, and a second holder frame fixed to the lens barrel and slidably supporting the first holder frame in a second direction orthogonal to the optical axis and the first direction. Movements in the first and second directions orthogonal to each other are composed to permit the correcting lens to translate in a desired direction relative to the lens barrel in a plane in parallel with the film. In addition to that, the anti-vibration device has dedicated linear motors actuating the correcting lens in first and second directions respectively, and obtaining a composite displacement with the motors enables the correcting lens to move in the desired direction.

In this way, any of prior art cameras having an anti-vibrating feature employs the similar method that the parallel movement mechanism supporting and translating the correcting lens has two pairs of a guide member and a drive means in combination provided in two orthogonal directions, respectively, so as to move the correcting lens in the desired direction where the guide member of each pair guides the correcting lens in one direction and the matched drive means actuates it in the same direction.

As has been mentioned above, however, the parallel movement apparatus having the combined guide member and drive means in each of the orthogonal directions is prone to make its supporting mechanism undesirably complicated. Such complicated supporting mechanism leads to a massive movable unit of the parallel movement apparatus, and this results in an adverse effect of poor performance in the translatory movement at high speed. Moreover, in the prior art parallel movement apparatus, sliding resistance derived from friction between the guide members is unavoidable, and this causes a degradation of controllability of the parallel movement apparatus. Also, in the parallel movement apparatus that uses the guide means provided for each of the orthogonal directions, its movable unit can translate in the desired direction but cannot rotate in the predetermined plane.

JP-A-61294216 describes a bearing for a high speed rater in which a movable plate is supported by balls comprising three magnetic members on a bearing baseplate. The baseplate is provided with a ball positioning magnet In each position corresponding with the balls. US-A-2002112543 discloses an actuator comprising a fixed member, a movable member, at least three spherical members and actuating coils.

The present invention is defined in the appended claims.

The present invention provides an actuator with a parallel movement apparatus that has a simple mechanism and capable of quick response.

The present invention also provides an actuator having a movable member translatable and rotatable in a desired direction in a predetermined plane.

In the present invention thus configured, at least three of the spherical members are attracted onto either of the flat supporting surface of the movable and fixed members by means of the attracting means. The remaining one of the movable member or the fixed member is superposed on the attracted spherical members so as to support the fixed member and the movable member in parallel with each other. When the movable member is moved in parallel with the fixed member, the spherical members, being sandwiched between both the members, roll on the flat supporting surfaces of both the members.

In the actuator configured in this manner according to the present invention, since only rolling resistance is caused while the movable member is being moved parallel with the fixed member, such a simple mechanism works satisfactory to let the movable member responsive to the high speed movement and to translate and rotated the movable member in the desired direction in the plane in parallel with the fixed member.

Preferably, the actuator further includes a movable member attracting means for attracting the movable member onto the fixed member.

Configured in this way so as to attract the movable member onto the fixed member, the actuator can be orientated to a desired direction in use.

Preferably, the actuator is designed so that the spherical members are attracted by magnetic force, and the spherical member attracting means, which is provided in either the fixed member or the movable member, is spherical member attracting magnet.

Configured in this way according to the present invention, the simple structure enables a stable attraction of the spherical members.

Preferably, the movable member attracting means is comprised of a holding magnet provided in either of the fixed member and the movable member and a magnetic body provided in the remaining one of the fixed member and the movable member or integrated with the remaining one so as to be attracted by the holding magnet.

Configured in this manner according to the present invention, magnetic force between the holding magnet provided in one of the fixed member and the movable member and the magnetic body provided in the other lets the movable member attracted onto the fixed member.

With such a configuration in accordance with the present invention, the fixed member and the movable member, which are not mechanically coupled to each other, are simply attachable to and detachable from each other.

In the present invention, preferably, the movable member attracting means is comprised of an elastic element linking the fixed member to the movable member so as to attract the movable member onto the fixed member.

In this invention configured in this manner, by virtue of the elastic element, the movable member is attracted onto the fixed member.

With such a configuration in accordance with the present invention, the elastic element can be used as a signal line transmitting signals between the movable member and the fixed member.

In the present invention, preferably, the spherical members are disposed on a predetermined circle at the same distance from each other, and the movable member attracting means is inside the circle.

With such a configuration according to the present invention, the movable member can be supported stably relative to the fixed member.

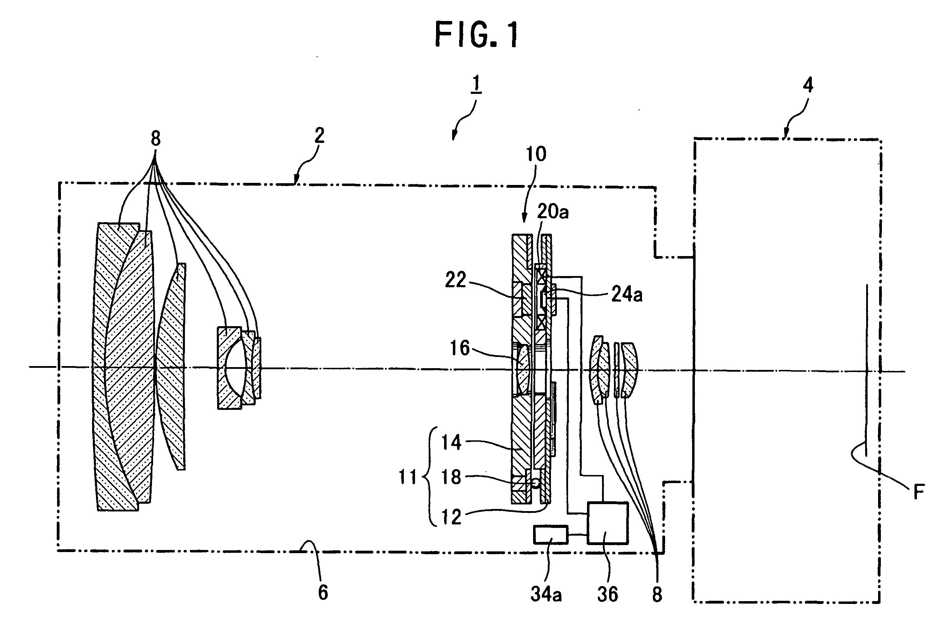

With reference to the accompanying drawings, preferred embodiments of the present invention will be described. First, referring to Figs. 1 to 11, a first embodiment of a camera according to the present invention will be detailed. Fig. 1 is a sectional view showing the first embodiment of the camera according to the present invention.

As can be seen in Fig. 1, the first embodiment of the camera according to the present invention denoted by reference numeral 1 comprises of a lens unit 2 and a camera body 4. The lens unit 2 includes a lens barrel 6, a plurality of photographing lenses 8 housed in the lens barrel 6, an actuator 10 moving an image stabilizing lens 16 in a predetermined plane, and gyros 34a, 34b respectively serving as vibration sensing means to detect vibrations of the lens barrel 6 (the gyro 34a alone is shown in Fig. 1). The camera 1 uses the gyros 34a, 34b to detect the vibrations, and in response to the detection results, the actuator 10 works to move the image stabilizing lens 16 to obtain a stabilized image focused in a film plane F within the camera body 4. The actuator 10 is made of a parallel movement apparatus 11 combined with an actuating means, as described in detail later. In this embodiment, a piezoelectric vibration gyro is used for the gyros 34a, 34b, respectively. Also, in this embodiment, the image stabilizing lens 16 is made of a piece of lens, and alternatively, it may be of a group of more than one lenses. Hereinafter, the term of the "image stabilizing lens" covers a piece of lens and a group of lenses used to stabilize an image.

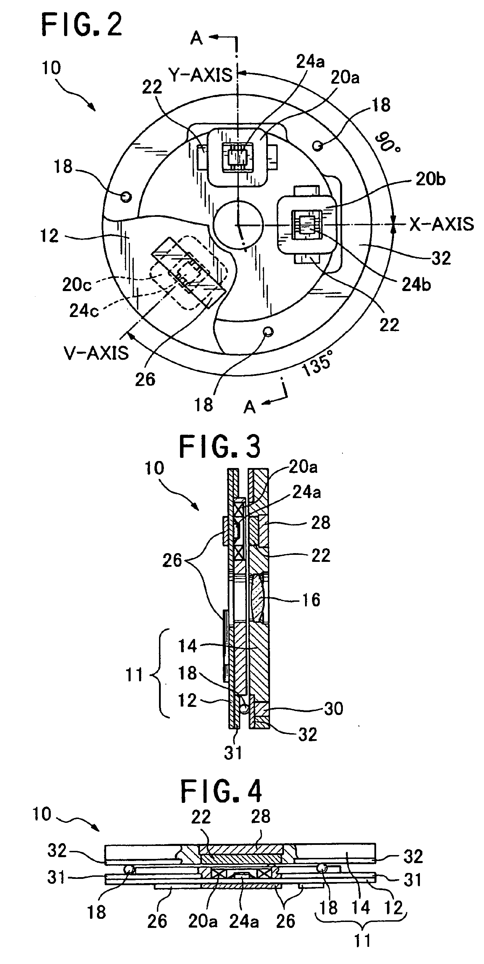

Next, referring to Figs. 2 to 4, the actuator 10 will be described in detail. Fig. 2 is a frontal partial sectional view of the actuator 10, Fig. 3 is a cross-sectional view taken along the line A-A in Fig. 2, and Fig. 4 is a top partial sectional view of the same. Fig. 1 is a depiction of the actuator 10 viewed on the side of the film plane F in Fig. 1, illustrating a fixed plate 12 partially cut away, and simply for the convenience of understanding, this view is referred to as the "frontal view" hereinafter. As will be recognized in Figs. 2 to 4, the actuator 10 has the fixed plate 12 or a fixed member secured inside the lens barrel 6, a movable frame 14 or a movable member movably supported relative to the fixed plate 12, and a parallel movement apparatus 11 that comprises three steel balls 18 spherical in shape and supporting the movable frame 14. The parallel movement apparatus 11 has magnets 30 serving as a spherical member attracting means for attracting the steel balls 18 onto the movable frame 14, steel ball contacts 31, 32 affixed to the fixed plate 12 and the movable frame 14, respectively so as to let the steel balls 18 smoothly roll between them. Three of the steel balls 18 work as a movable member supporting means while the steel ball contacts 31, 32 respectively provide flat supporting surfaces of the fixed member and the movable member.

The actuator 10 further has three actuating coils 20a, 20b, 20c attached to the fixed plate 12, three actuating magnets 22 attached to the movable frame 14 in respectively corresponding positions to the actuating coils 20a, 20b, 20c, and magnetic sensors 24a, 24b, 24c, namely, position sensing means disposed inside the actuating coils 20a, 20b, 20c, respectively. The actuator 10 is also provided with attracting yokes 26 mounted on the fixed plate 12 to let the magnetic force of the actuating magnets attract the movable frame 14 to the fixed plate 12, and provided with a back yoke 28 mounted on a reverse side of each of the actuating magnets 22 to effectively propagate the magnetism of the actuating magnets toward the fixed plate 12. The actuating coils 20a, 20b, 20c and the actuating magnets 22 disposed in the corresponding positions to them together compose a drive means that enables the movable frame 14 to translate and rotate relative to the fixed plate 12. The actuating magnets 22 also serve as holding magnets to attract the movable frame 14 onto the fixed plate 12 while the attracting yokes 26 serve as the magnetic body attracted by the holding magnets.

Moreover, as shown in Fig. 1, the actuator 10 has a control means or a controller 36 controlling current to flow in the actuating coils 20a, 20b, 20c, respectively on the basis of vibrations detected by the gyros 34a, 34b and the position data of the movable frame 14 sensed by the magnetic sensors 24a, 24b, 24c.

The lens unit 2 is attached to the camera body 4 in order to focus incident light beams and form an image on the film plane F. The lens barrel 6 shaped approximately in a cylinder holds a plurality of photographing lens 8 inside and allows for part of the photographing lens 8 to move, thereby adjusting a focus.

The actuator 10 causes the movable frame 14 to move in a plane in parallel with the film plane F relative to the fixed plate 12 secured to the lens barrel 6, and this, in turn, causes the image stabilizing lens 16 on the movable frame 14 to move, so as to avoid shaking of the image formed on the film plane F even when the lens barrel 6 is vibrated. The fixed plate 12 is shaped approximately in a doughnut with three of the actuating coils 20a, 20b, 20c residing thereon. As can be seen in Fig. 2, the actuating coils 20a, 20b, 20c are disposed on a circle having its center identical with the optical axis of the lens unit 2. In this embodiment, the actuating coil 20a is located vertically above the optical axis, the actuating coil 20b is located horizontally along the optical axis, and the actuating coil 20c is located 135 degrees of the central angle away from the actuating coils 20a and 20b, respectively. Thus, adjacent ones of the actuating coils, 20a and 20b, 20b and 20c, and 20c and 20a, are separated from each other by 90 degrees of the central angle, 135 degrees of the central angle, and 135 degrees of the central angle, respectively, in order. The actuating coils 20a, 20b, 20c have their respective windings rounded square in shape, and these coils are disposed so that their respective center lines of the rounded squares are directed to radial direction of the circle on which the coils are disposed.

The movable frame 14 is shaped roughly in a donut and is located in parallel with the fixed plate 12, overlying the same. In a center aperture of the movable frame 14, the image stabilizing lens 16 is fitted. The rectangular actuating magnets 22 are embedded on the circle on the movable frame 14, and disposed in positions corresponding to the actuating coils 20a, 20b, 20c, respectively. In this specification, "positions corresponding to the actuating coils" are referred to as the positions substantially affected by the magnetic field developed by the actuating coils. Each of the actuating magnets 22 has its reverse side provided with a rectangular back yoke 28 so that the magnetic flux from the actuating magnet 22 can be efficiently disposed toward the fixed plate 12.

On a reverse side of each actuating coil on the fixed plate 12, namely, on the opposite side of the movable frame 14, a rectangular attracting yoke 26 is attached. The movable frame 14 is attracted onto the fixed plate 12 due to the magnetic force applying from each actuating magnet 22 onto the corresponding attracting yoke 26. In this embodiment, the magnetic line of force from the actuating magnet 22 efficiently reaches the attracting yoke 26 because the fixed plate 12 is formed of non-magnetic material.

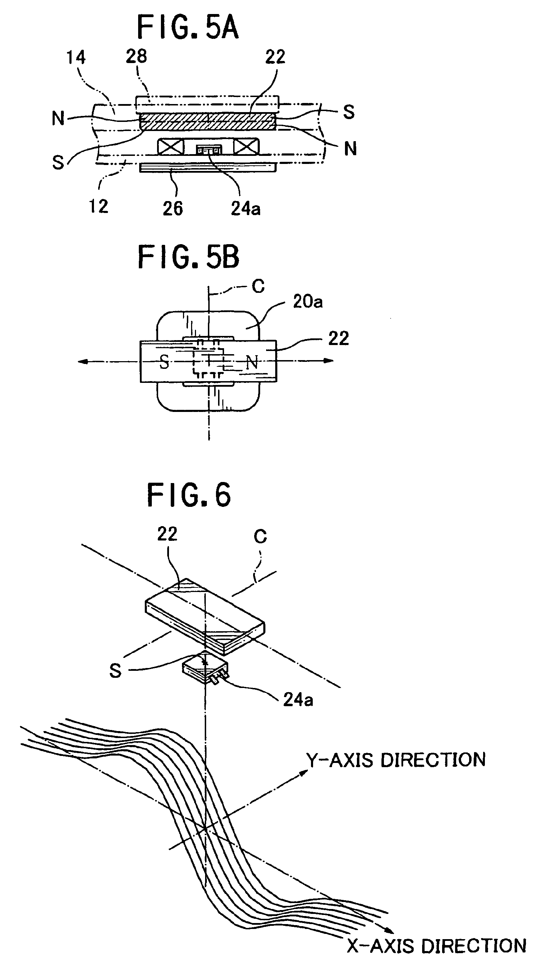

Fig. 5(a) is a partial enlarged top plan view showing positional relations among the actuating coil 20a, the corresponding ones of the actuating magnets 22, the back yokes 28, and the attracting yokes 26, and Fig. 5(b) is a partial enlarged frontal plan view. As can be seen in Fig. 2 and Figs. 5(a) and 5(b), the actuating magnet 22, the back yoke 28, and the attracting yoke 26, which are all shaped in a rectangle, have their respective longer sides extended along one another while having their respective shorter sides similarly extended along one another. Also, the actuating coil 20a has its sides laid in parallel with the longer and shorter sides of the corresponding one of the rectangular back yoke 28. The actuating magnets 22 have their respective magnetic neutral axes C coincide with radii of the circle on which the actuating magnets 22 are disposed. In this manner, the actuating magnets 22 receive the drive force in tangential directions to the circle as the current flows in the corresponding actuating coils. The remaining actuating coils 20b, 20c are laid in the similar positional relations with their respective corresponding ones of the actuating magnets 22, the back yokes 28, and the attracting yokes 26. In this specification, the terms "magnetic neutral axis C" mean the line connecting transit points from one polarity to another dominated by Sand N- poles which are defined as the opposite ends of the actuating magnet 22. Thus, in this embodiment, the magnetic neutral axis C passes the midpoints of the longer sides of the rectangular actuating magnet 22. Also, as shown in Fig. 5(a), the actuating magnet 22 has its polarities varied in the depthwise direction as well, where the lower left and the upper right in Fig. 5(a) assume the polarity of South (S) while the lower right and the upper left exhibit the polarity of North (N).

As will be recognized in Figs. 2 to 5, the actuating coils 20a, 20b, 20c respectively surround the magnetic sensors 24a, 24b, 24c. Each of the magnetic sensors has the center of sensitivity S positioned in the magnetic neutral axis C of the actuating magnet 22 when the movable frame 14 is in its neutral position. In this embodiment, a hole element is used for the magnetic sensor.

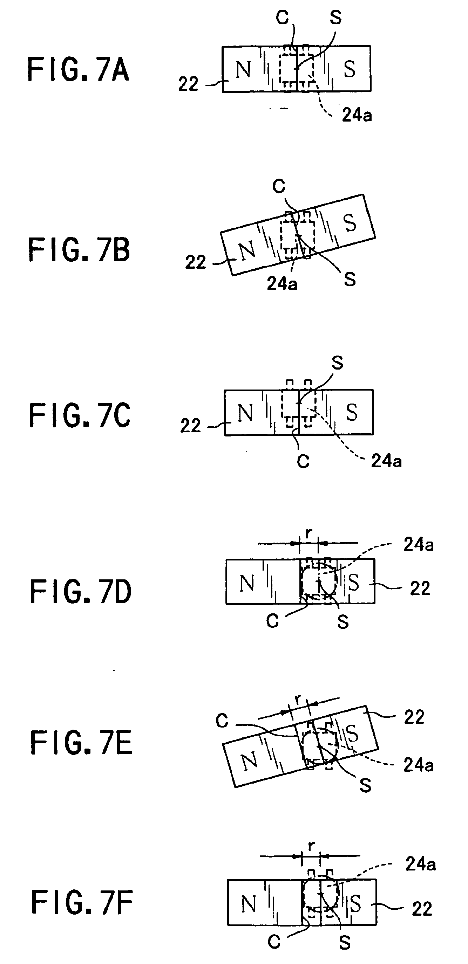

Figs. 6 and 7 are diagrams illustrating relations of a displacement of the actuating magnet 22 and a signal generated from the magnetic sensor 24a. As shown in Fig. 6, when the center of sensitivity S of the magnetic sensor 24a is in the magnetic neutral axis C of the actuating magnet 22, the output signal from the magnetic sensor 24 is at a level of naught. As the movable frame 14 is moved along with the actuating magnet 22 thereon to resultantly deviate the center of sensitivity S of the magnetic sensor 24a from the magnetic neutral axis, the output signal from the magnetic sensor 24a varies. As shown in Fig. 6, when the actuating magnet 22 is moved in directions along the X-axis, namely, in the directions orthogonal to the magnetic neutral axis C, the magnetic sensor 24a produces a sinusoidal signal. Thus, when the displacement is minute, the magnetic sensor 24a generates a signal approximately in proportion to the displacement of the actuating magnet 22. In this embodiment, when the displacement of the actuating magnet 22 falls within a range less than 3 % of the longer side of the actuating magnet 22, the signal output from the magnetic sensor 24a is approximately in proportion to the distance from the center of sensitivity S of the magnetic sensor 24a to the magnetic neutral axis C. Also, in this embodiment, the actuator 10 effectively works so far as the outputs from the magnetic sensors are approximately in proportion to the distance.

As will be recognized in Figs. 7(a) to 7(c), when the magnetic neutral axis C of the actuating magnet 22 lies in the center of sensitivity S of the magnetic sensor 24a, the output signal from the magnetic sensor 24a is at the level of naught either in the case of Fig. 7(b) where the actuating magnet 22 is rotated or in the case of Fig 7(c) where the actuating magnet 22 is moved in directions along the magnetic neutral axis C. Moreover, as shown in Figs. 7(d) to 7(f), when the magnetic neutral axis C of the actuating magnet 22 deviates from the center of sensitivity S of the magnetic sensor 24a, a signal output from the magnetic sensor 24a is that which is in proportion to a radius r of a circle of which center is equivalent to the center of sensitivity S and with which the magnetic neutral axis C of the actuating magnet 22 is tangential. Thus, for the identical radius r of the circle to which the magnetic neutral axis C of the actuating magnet 22 is tangential, signals at the same level are produced from the magnetic sensor 24a in any of the cases as in Fig. 7 (d) where the actuating magnet 22 is moved in the directions orthogonal to the magnetic neutral axis C, as in Fig. 7(e) where the actuating magnet 22 is translated and rotated, and as in Fig. 7(f) where the actuating magnet 22 is translated in an arbitrary direction.

Although embodiments in terms of the magnetic sensor 24a has been described herein, the remaining magnetic sensors 24b, 24c produce the similar signals under positional relations with the corresponding actuating magnets 22, as well. Hence, analyzing the signals detected by the magnetic sensors 24a, 24b, 24c, respectively, enables to specify the position of the movable frame 14 relative to the fixed plate 12 after the translation and rotation movements.

As can be seen in Fig. 2, three of the steel balls 18 are disposed on the outer circle apart from the one on which the actuating coils of the fixed plate 12 are disposed. The steel balls 18 are separated from each other at an angular interval of 120-degree central angle, with one of the steel balls 18 being disposed between the actuating coils 20a and 20b. As depicted in Fig. 3, the steel balls 18 are attracted to the movable frame 14 by virtue of spherical body attracting magnets 30 embedded in positions corresponding to the steel balls 18, respectively. The steel balls 18 are thus attracted to the movable frame 14 by the spherical body attracting magnets 30 while the movable frame 14 is attracted to the fixed plate 12 by the activating magnets 22, and resultantly, the steel balls 18 are sandwiched between the fixed plate 12 and the movable frame 14. This enables the movable frame 14 to be supported in the plane in parallel with the fixed plate 12, and the rolling of the steel balls 18 held between these two members permits the movable frame 14 to translate and rotate relative to the fixed plate 12 in an arbitrary direction.

The steel ball contacts 31, 32 are mounted on both the fixed plate 12 and the movable frame 14 in their respective outer peripheries. When the movable frame 14 is moved with the steel balls 18 being sandwiched between the fixed plate 12 and the movable frame 14, the steel balls 18 roll on the steel ball contacts 31, 32, respectively. Thus, the relative movement of the movable frame 14 to the fixed plate 12 would not cause friction due to either of the members sliding on each other. Preferably, the steel ball contacts 31, 32 are finished in smooth contact surfaces and made of material having high surface hardness so as to reduce resistance of the steel balls 18 to the steel ball contacts 31, 32 due to the rolling of the steel balls.

Furthermore, in this embodiment, the steel ball contact 32 is made of non-magnetic material so that magnetic flux from the attracting magnet 30 efficiently reaches each of the steel balls 18. Also, preferably, the steel ball contacts 31, 32 respectively range from 0.2 mm to 0.5 mm in thickness. In this embodiment, the steel ball contacts 31, 32 are made of 0.3-milimeter-thick aluminum plated with electroless nickel. Also, in this embodiment, although spheres made of steel are used for the steel balls 18, they are not necessarily spheres. Thus, the steel balls 18 can be replaced with any alternatives that have their respective contact surfaces with the steel ball contacts 32 generally spherical. Such forms are referred to as "spherical members" in this specification.

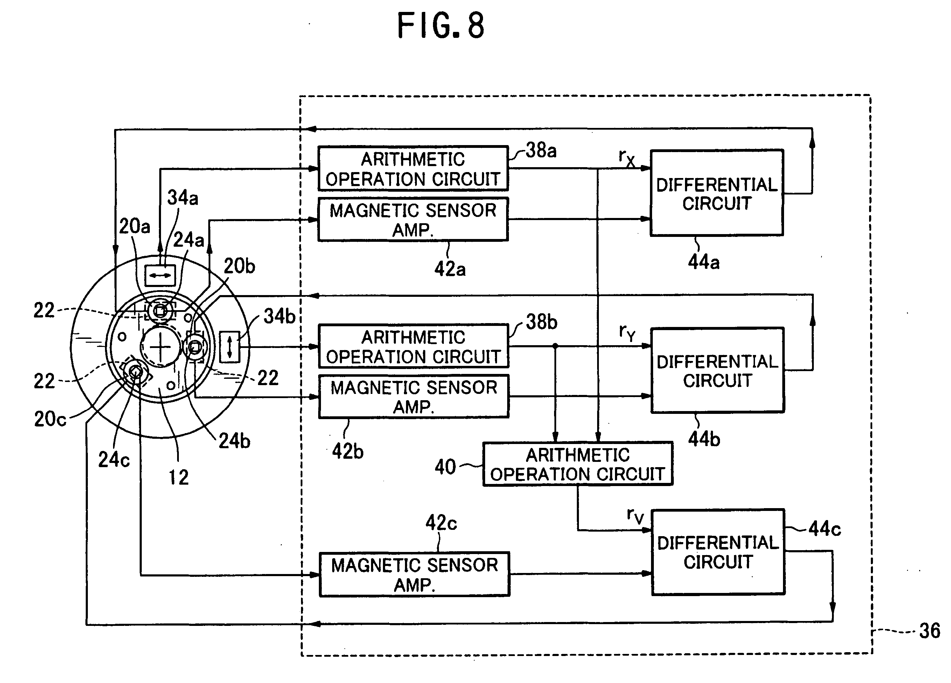

Then, referring to Fig. 8, the control of the actuator 10 will be described. Fig. 8 is a block diagram showing system architecture for the signal processing in a controller 36. As can be seen in Fig. 8, vibrations of the lens unit 2 is detected by two of the gyros 34a, 34b momentarily, and the detection results are transferred to lens position command signal generating means or arithmetic operation circuits 38a, 38b built in the controller 36. In this embodiment, the gyro 34a is adapted to sense an angular acceleration of the yaw motion of the lens unit 2 while the gyro 34b is adapted to sense the angular acceleration of the pitching motion of the lens unit.

The arithmetic operation circuits 38a, 38b, upon receiving the angular acceleration from the gyros 34a, 34b momentarily, produce command signals instructing the time-varying position to which the image stabilizing lens 16 is to be moved. Specifically, the arithmetic operation circuit 38a twice integrates the angular acceleration of the yawing motion detected by the gyro 34a in the time quadrature process and adds a predetermined correction signal to obtain a horizontal component of the lens position command signal, and similarly, the arithmetic operation circuit 38b arithmetically produces a vertical component of the lens position command signal from the angular acceleration of the pitching motion detected by the gyro 34b. The lens position command signal obtained in this manner is used to time-varyingly move the image stabilizing lens 16, so that an image focused on the film plane F within the camera body 4 is shaken but stabilized even when the lens unit 2 is vibrated during exposure to light in taking a picture.

A coil position command signal producing means built in the controller 36 is adapted to produce coil position command signals associated to each actuating coils on the basis of the lens position command signal generated by the arithmetic operation circuits 38a, 38b. The coil position command signal is the one which indicates the positional relation between the actuating coils 20a, 20b, 20c and their respective corresponding actuating magnets 22 in the case that the image stabilizing lens 16 is moved to the position designated by the lens position command signal. Specifically, when the actuating magnets 22 in pairs with their respective actuating coils are moved to the positions designated by coil position command signals, the image stabilizing lens 16 is moved to the position where the lens position command signal instructs to move to. In this embodiment, since the actuating coil 20a is vertically above the optical axis, the coil position command signal related to the actuating coil 20a is equivalent to the horizontal component of the lens position command signal produced from the arithmetic operation circuit 38a. Also, since the actuating coil 20b is positioned lateral to the optical axis, the coil position command signal related to the actuating coil 20b is equivalent to the vertical component of the lens position command signal produced from the arithmetic operation circuit 38b. Moreover, the coil position command signal related to the actuating coil 20c is produced from coil position command signal producing means or the arithmetic operation circuit 40 on the basis of both the horizontal and vertical components of the lens position command signal.

On the other hand, a displacement of the actuating magnet 22 relative to the actuating coil 20a, which is determined by the magnetic sensor 24a, is amplified at a predetermined magnification by a magnetic sensor amplifier 42a. A differential circuit 44a allows for the current to flow in the actuating coil 20a at the rate in proportion to the difference between the horizontal component of the coil position command signal from the arithmetic operation circuit 38a and the displacement of the actuating magnet 22 in a pair with the actuating coil 20a from the magnetic sensor amplifier 42a. Thus, as the difference between the coil position command signal and the output from the magnetic sensor amplifier 42a is naught, no current flows in the actuating coil 20a, which results in the force activating the actuating magnet 22 also becoming naught.

Similarly, the displacement of the actuating magnet 22 relative to the actuating coil 20b, which is determined by the magnetic sensor 24b, is amplified at a predetermined magnification by a magnetic sensor amplifier 42b. A differential circuit 44b allows for the current to flow in the actuating coil 20b at the rate in proportion to the difference between the vertical component of the coil position command signal from the arithmetic operation circuit 38b and the displacement of the actuating magnet 22 in a pair with the actuating coil 20b from the magnetic sensor amplifier 42b. Thus, as the difference between the coil position command signal and the output from the magnetic sensor amplifier 42b is naught, no current flows in the actuating coil 20b, which results in the force activating the actuating magnet 22 also becoming naught.

Also similarly, the displacement of the actuating magnet 22 relative to the actuating coil 20c, which is determined by the magnetic sensor 24c, is amplified at a predetermined magnification by a magnetic sensor amplifier 42c. A differential circuit 44c allows for the current to flow in the actuating coil 20c at the rate in proportion to the difference between the coil position command signal from the arithmetic operation circuit 40 and the displacement of the actuating magnet 22 in a pair with the actuating coil 20c from the magnetic sensor amplifier 42c. Thus, as the difference between the coil position command signal and the output from the magnetic sensor amplifier 42c is naught, no current flows in the actuating coil 20c, which results in the force activating the actuating magnet 22 also becoming naught.

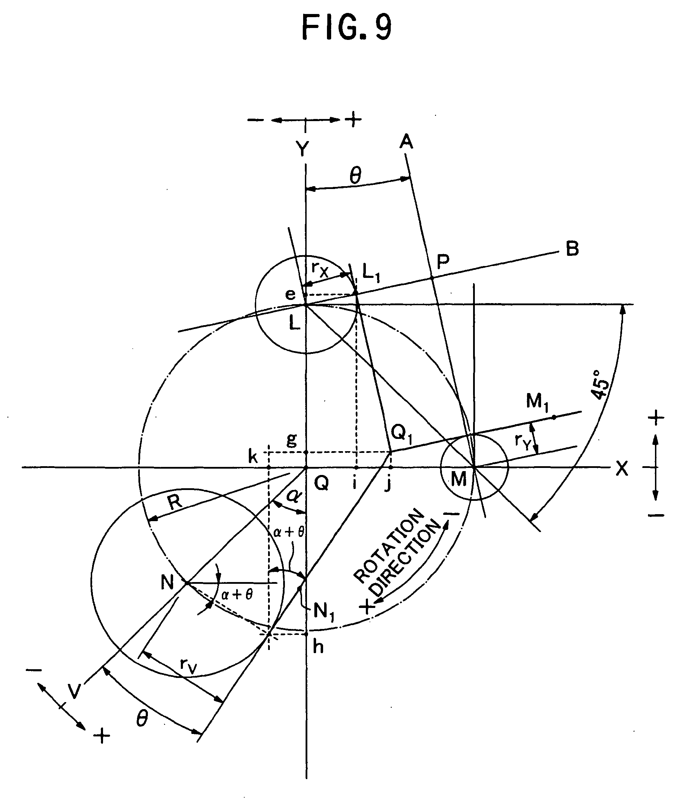

With reference to Fig. 9, described now will be the relation of the lens position command signal with the coil position command signal in the case of translating the movable frame 14. Fig. 9 is a diagram depicting positional relations of the actuating coils 20a, 20b, 20c disposed on the fixed plate 12 with three of the actuating magnets 22 deployed on the movable frame 14. First, three of the actuating coils 20a, 20b, 20c are respectively located in points L, M, N on a circle of a radius R with its center coinciding with the origin (or the point zero) Q of the coordinate system. The magnetic sensors 24a, 24b, 24c are also located in such a manner that their respective centers S of sensitivity are coincident with the points L, M, N, respectively. When the movable frame 14 is in a neutral position, or when the center of the image stabilizing lens 16 is in the optical axis, the midpoints of the magnetic neutral axes C of the actuating magnets 22 in pairs with the actuating coils are also coincident with the points L, M, N, respectively. Assuming that the horizontal axis X and the vertical axis Y having the origin Q in common respectively meet another axis V at 135 degrees at the origin, the actuating magnets have their respective magnetic neutral axes C coinciding with the X-, Y-, and V- axes, respectively.

Then, when the movable frame 14 is moved to cause the center of the image stabilizing lens 16 to shift to a point $Q_1$ and is further moved in the counterclockwise direction by an angle θ about the point Q1, the midpoints of the magnetic neutral axes C of the actuating magnets 22 are shifted to points $L_1$, $M_1$, $N_1$, respectively. In order to shift the movable frame 14 to such a position, it is required that the coil position command signals related to the actuating coils 20a, 20b, 20c should have their respective signal levels in proportion to radii of circles which have their respective centers coinciding with the points L, M, N, respectively, and which circles are tangential to lines $Q_1L_1$, $Q_1M_1$, $Q_1N_1$, respectively. Those radii of the circles are denoted by $r_X$, $r_Y$, $r_V$, respectively.

Positive and negative conditions of the coil position command signals $r_X$, $r_Y$, $r_V$ are determined as depicted in Fig. 9. Specifically, the coil position command signal $r_X$, which is to shift the point $L_1$ to the first quadrant, is positive, while the same that is to shift to the second quadrant is negative, and similarly, the command signal $r_Y$, which is to shift the point $M_1$ to the first quadrant, is positive while the same that is to shift to the fourth quadrant is negative. In addition to that, the coil position command rv, which is to shift the point $N_1$ below the V-axis, is determined as positive, while the same that is to shift above the V-axis is negative. As with positive and negative conditions for angles, the clockwise direction is given a positive sign. Thus, if the movable frame 14 is rotated from the neutral position in the clockwise direction, the coil position command signals $r_X$, $r_Y$, $r_V$ assume positive, negative, and negative, respectively.

Also, it is now assumed that the coordinates of the point $Q_1$, $L_1$, $N_1$ are (j, g), (i, e) and (k, h), respectively, and that the V- and Y-axes meet at an angle $\alpha$. Furthermore assumed is that there is an intersection P of an auxiliary line A passing the point M and in parallel with the line $Q_lL_l$ with another auxiliary line B passing the point L and in parallel with the line $Q_lM_l$.

Applying now the law of sines to a right triangle LMP, the following equations are given:

$$\frac{\overline{LP}}{\sin(45^\circ + \theta)} = \frac{\overline{MP}}{\sin(45^\circ - \theta)} = \frac{\sqrt{2}R}{\sin 90^\circ} = \sqrt{2}R \quad ...(1)$$

From the above equations, obtained are the following formulae:

$$\overline{LP} = R(\cos\theta + \sin\theta) \quad ...(2)$$

$$\overline{MP} = R(\cos\theta - \sin\theta) \quad ...(3)$$

The coordinates e, g, h, i, j, and k are respectively expressed by using the terms R, $r_X$, $r_Y$, $r_V$, $\theta$, and $\alpha$, as follows:

$$e = -r_x \sin\theta + R$$
$$g = e - (\overline{MP} - r_Y)\cos\theta = -r_X \sin\theta + r_Y \cos\theta - R\cos\theta(\cos\theta - \sin\theta) + R$$
$$h = -R\cos\alpha - r_V \sin(\alpha + \theta)$$
$$i = r_X \cos\theta$$
$$j = i - (\overline{MP} - r_Y)\sin\theta = r_X \cos\theta + r_Y \sin\theta - R\sin\theta(\cos\theta - \sin\theta)$$
$$k = -R\sin\alpha + r_V \cos(\alpha + \theta) \quad ...(4)$$

As to a right triangle with the apexes of the coordinates (k, g), (j, g), and (k, h), a relation established can be expressed as in the following equations:

$$\frac{j - k}{g - h} = \tan(\alpha + \theta) = \frac{\sin(\alpha + \theta)}{\cos(\alpha + \theta)} = \frac{\sin\alpha\cos\theta + \cos\alpha\sin\theta}{\cos\alpha\cos\theta - \sin\alpha\sin\theta}$$
$$= \frac{r_X \cos\theta + r_Y \sin\theta - R\sin\theta(\cos\theta - \sin\theta) + R\sin\alpha - r_V \cos(\alpha + \theta)}{-r_X \sin\theta + r_Y \cos\theta - R\cos\theta(\cos\theta - \sin\theta) + R + R\cos\alpha + r_V \sin(\alpha + \theta)} \quad ...(5)$$

The above equations in (5) can be expanded and rearranged as in the following equation:

$$r_X \cos\alpha - r_Y \sin\alpha - r_V = R(\sin\alpha + \cos\alpha)\sin\theta + R\sin\theta \quad ...(6)$$

Besides, in case of translating the movable frame 14, θ =0 is satisfied, and the above equation (6) are reorganized as follows:

$$r_X \cos\alpha - r_Y \sin\alpha - r_V = 0 \qquad \ldots(7)$$

In this embodiment, also, $\alpha$=45° is satisfied, and the equation (7) can be abbreviated as follows:

$$r_V = \frac{(r_X - r_Y)}{\sqrt{2}} \qquad \ldots(8)$$

Thus, in this embodiment, when the image stabilizing lens 16 has its center translated to the coordinates (j, g) in response to the lens position command signal, the coil position command signals $r_X$ and $r_Y$ having their respective signal levels in proportion to the coordinates j and g are generated for the actuating coils 20a and 20b, respectively, while the coil position command signal rv is computed by applying the equation (8), for the actuating coil 20c.

The coil position command signal $r_X$ is identical with the output signal from the arithmetic operation circuit 38a in Fig. 8 while the coil position command signal $r_Y$ is identical with the output signal from the arithmetic operation circuit 38b. Similarly, the coil position command signal $r_V$ is identical with the output signal from the arithmetic operation circuit 40, which performs an arithmetic operation equivalent to the process provided in the equation (8).

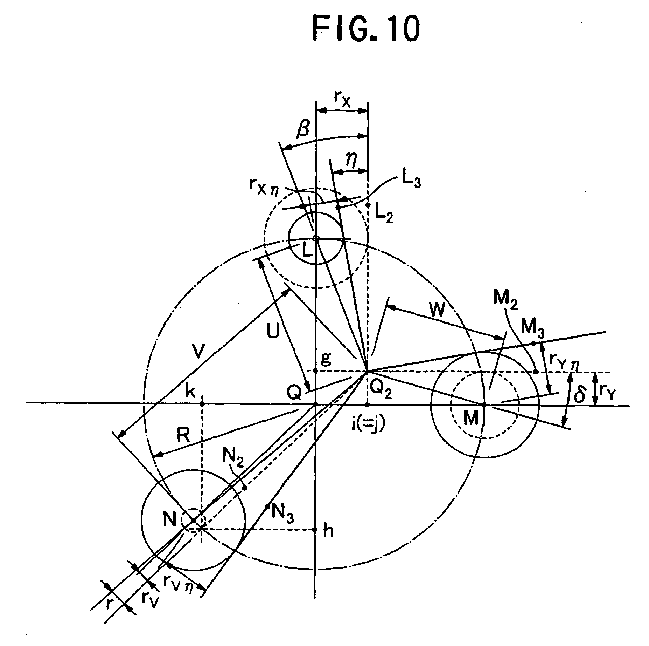

Then, referring to Fig. 10, a relation of the lens position command signal with the coil position command signal in the case of rotating the movable frame 14. Fig. 10 is a diagram illustrating the coil position command signal in the case that the movable frame 14 is translated and rotated. As can be seen in Fig. 10, first the movable frame 14 is translated to cause the center of the image stabilizing lens 16 attached to the same to shift from the point Q to another point $Q_2$, and accordingly, the actuating magnets 22 mounted on the movable frame 14 are moved from the points L, M, N to points $L_2$, $M_2$, $N_2$, respectively. For such translating motion, the coil position command signals $r_X$, $r_Y$, $r_V$ are produced. The signal levels of the coil position command signals can be obtained through the aforementioned equations as in (8). Now obtained will be the command signals $r_X \eta$, $r_Y \eta$, $r_V \eta$ in the case where the movable frame 14 is rotated about the point $Q_2$ by an angle η in the counterclockwise direction.

Similar to the case depicted in Fig. 9, first assuming that the coordinates of the point $Q_2$ and the contact point of the line $Q_2N_2$ with a circle of radius rv with the center N are (j, g) and (k, h), respectively, and replacing the term θ in the equation (4) with zero leads to the following relations:

$$g = r_Y$$
$$j = i = r_X$$
$$k = -R \sin\alpha + r_V \cos(\alpha + \theta) = -R\frac{1}{\sqrt{2}} + r_V \frac{1}{\sqrt{2}} \qquad \ldots(9)$$

When the movable frame 14 is rotated about the point Q2 by an angle η in the counterclockwise direction, the points $L_2$, $M_2$, $N_2$ are respectively moved to points $L_3$, $M_3$, $N_3$. It is also assumed that angles at which pairs of segments $Q_2L_2$ and $Q_2L$, $Q_2M_2$ and $Q_2M$, and $Q_2N_2$ and $Q_2N$ meet are denoted by β, δ, and γ, respectively. Additionally assumed is that the segments $Q_2L$, $Q_2M$, and $Q_2N$, have their respective lengths designated as U, W, and V. It is given that the coil position command signals $r_X \eta$, $r_Y \eta$, $r_V \eta$ have their respective signal levels equal to radii of circles having their respective center at the points L, M, N and tangential with lines $Q_2L_3$, $Q_2M_3$, and $Q_2N_3$, respectively, and therefore, the relations expressed as follows can be established:

$$r_{X\eta} = U\sin(\beta + \eta) = U(\sin\beta\cos\eta + \cos\beta\sin\eta)$$
$$r_{V\eta} = -V\sin(\gamma + \eta) = -V(\sin\gamma\cos\eta + \cos\gamma\sin\eta)$$
$$r_{Y\eta} = -W\sin(\delta + \eta) = -W(\sin\delta\cos\eta + \cos\delta\sin\eta) \qquad \ldots(10)$$

sin β, cosβ and other terms can be replaced with the following expressions according to some mathematical relations;

$$\sin\beta = \frac{i}{U} = \frac{r_X}{U}$$
$$\cos\beta = \frac{R-g}{U} = \frac{R-r_Y}{U}$$
$$\sin\gamma = -\frac{r_V}{V}$$
$$\cos\gamma = \frac{\sqrt{2}(i-k)}{V} = \frac{\sqrt{2}r_X + R - r_V}{V}$$
$$\sin\delta = \frac{g}{W} = \frac{-r_Y}{W}$$
$$\cos\delta = \frac{R-i}{W} = \frac{R-r_X}{W} \qquad \ldots(11)$$

In addition, the relations in the equations in (11) are substituted for their respective corresponding terms in the equations in (10) to eliminate the terms like β, γ, and δ, formulae expressing the relations as follows are obtained:

$$r_{X\eta} = r_X\cos\eta + (R - r_Y)\sin\eta$$
$$r_{V\eta} = r_V\cos\eta - (\sqrt{2}r_X + R - r_V)\sin\eta$$
$$r_{Y\eta} = r_Y\cos\eta - (R - r_X)\sin\eta \qquad \ldots(12)$$

Thus, in order to shift the movable frame 14 to a point that is determined by first translating the center of the image stabilizing lens 16 to the coordinates (j, g) and then rotating the same about the resultant point by an angle η in the counterclockwise direction, the coil position command signals $r_X$, $r_Y$, $r_V$ are obtained through the formulae (8) and (9) above all, and then the obtained values are substituted for the corresponding terms in the formulae (12) to obtain the coil position command signals $r_X\,\eta$, $r_Y\,\eta$, rv η, which are to be given for the actuating coils.

In the case where the movable frame 14 is to be rotated about the point Q by the angle η in the counterclockwise direction without the translating motion, the terms $r_X$, $r_Y$, and $r_V$ in the formulae (12) are substituted for zero as follows:

$$r_{X\eta} = R\sin\eta$$
$$r_{V\eta} = R\sin\eta$$
$$r_{Y\eta} = -R\sin\eta \qquad \ldots(13)$$

Thus, the coil position command signals $r_X\,\eta$, $r_Y\,\eta$, and rv η can be obtained through the arithmetic operations.

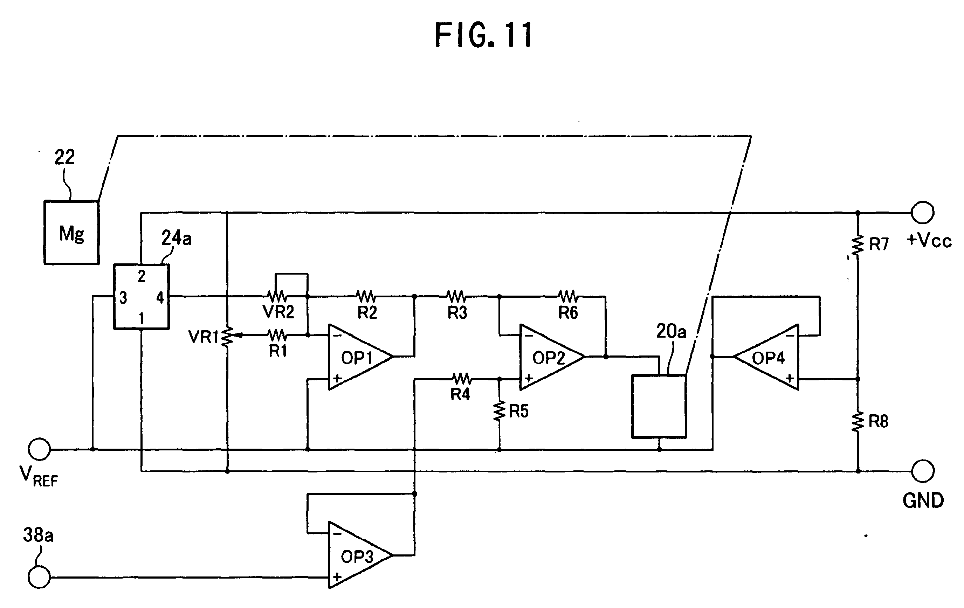

Next, referring to Fig. 11, an exemplary circuit of the controller 36 is described. Fig. 11 depicts an example of a circuit controlling the current that flows in the actuating coil 20a. In the circuit in Fig. 11, supplemental circuitry such as power supply lines to activate the operational amplifiers is omitted. First, as can be seen in Fig. 11, supply voltage $+V_{CC}$ and the ground are connected along with electrical resistances R7 and R8 in series as a whole. An operational amplifier OP4 has its positive input terminal connected between the electrical resistances R7 and R8. The operational amplifier OP4 has its negative input terminal connected to an output terminal of the operation amplifier OP4. In this way, the resistances R7 and R8 permit voltage at the output terminal of the operational amplifier OP4 to reach the level of the reference voltage $V_{REF}$ between the supply voltage Vcc and the ground potential GND, so that it can be retained at that level.

On the other hand, the supply voltage +Vcc is applied between first and second terminals of the magnetic sensor 24a. A third terminal of the magnetic sensor 24a is connected to the reference voltage $V_{REF}$. In this manner, as magnetism affecting the magnetic sensor 24a is varied, a fourth terminal of the magnetic sensor 24a accordingly varies between the levels of+Vcc and GND.
The magnetic sensor 24a has its fourth terminal connected to a negative input terminal of an operational amplifier OP1 with a variable resistance VR2 intervening therebetween, and the variable resistance VR2 can be adjusted to regulate the gain of the output from the magnetic sensor 24a. The variable resistance VR1 has its opposite fixed terminals connected to the voltage levels of +Vcc and GND, respectively. The variable resistance VR1 has its variable terminal connected to a negative input terminal of the operational amplifier OP1 with the electrical resistance R1 intervening between them. The variable resistance VR1 can be adjusted to regulate the offset voltage of the output from the operational amplifier OP1. Also, the operational amplifier OP1 has its input terminal connected to the reference voltage $V_{REF}$. The operational amplifier OP1 has its output terminal connected to a negative input terminal of the operational amplifier OP1 with the electrical resistance R2 intervening therebetween.

The arithmetic operation circuit 38a producing the coil position command signal related to the actuating coil 20a is connected to a positive input terminal of the operational amplifier OP3. The operational amplifier OP3 has its output terminal connected to a negative input terminal of the operational amplifier OP3. Thus, the operational amplifier OP3 serves as a buffer amplifier of the coil position command signal.

The operational amplifier OP1 has its output terminal connected to a negative input terminal of the operational amplifier OP2 with the electrical resistance R3 intervening between them. Also, the operational amplifier OP3 has its output terminal connected to a positive input terminal of the operational amplifier OP2 with the electrical resistance R4 intervening therebetween. In this manner, a difference of the output from the magnetic sensor 24a from the coil position command signal is produced from an output terminal of the operational amplifier OP2. The operational amplifier OP2 has its positive input terminal connected to the reference voltage $V_{REF}$ with an electrical resistance R5 intervening therebetween, and has its output terminal connected to the negative input terminal of the operational amplifier OP2 with an electrical resistance R6 intervening therebetween. Gains of the positive and negative outputs of the operational amplifier OP2 are defined by these electrical resistances R5 and R6.

The operational amplifier OP2 has its output terminal connected to one of the opposite ends of the actuating coil 20a, and the other end of the actuating coil 20a is connected to the reference voltage $V_{REF}$. Thus, the current equivalent to the voltage difference between the output from the operational amplifier OP2 and the reference voltage $V_{REF}$ flows in the actuating coil 20a. The current flowing in the actuating coil 20a develops magnetic field, and this causes magnetic force to affect on the actuating magnet 22, which eventually brings about a displacement of the actuating magnet 22. Such magnetic force is directed to let the actuating magnet 22 to come close to a position as instructed in the coil position command signal. Once the actuating magnet 22 is moved, the voltage output from the fourth terminal of the magnetic sensor 24a is varied. When the actuating magnet 22 reaches the position instructed in the coil position command signal, the voltages supplied to the positive and negative input terminals of the operational amplifier OP2 become equal to each other, and the current no longer flows in the actuating coil 20a.

The aforementioned operational amplifiers OP1 and OP2 in Fig. 11 are the counterparts of the magnetic sensor amplifier 42a and the differential circuit 44a in Fig. 8. Although the circuitry controlling the current to flow in the actuating coil 20a has been described, the current to flow in the actuating coil 20b is also controlled by means of the similar circuitry. Additionally, the current to flow in the actuating coil 20c can be controlled by means of the similar circuit, but in this situation, the arithmetic operation circuit 40 has its output connected to the positive input terminal of the operational amplifier OP3. The arithmetic operation circuit 40 consists of a differential amplifier functioning equivalent to the operational amplifier OP2, an electric resistance producing divided voltage in $(1/2)^{1/2}$ of the pre-process level, and the like.

With reference to Figs. 1 and 8, the operation of the first embodiment of the camera 1 according to the present invention will be described. First, turning on a start switch (not shown) for an anti-vibrating function of the camera 1 allows for the actuator 10 in the lens unit 2 to begin working. The gyros 34a and 34b built in the lens unit 2 time-varyingly detect vibrations in a predetermined frequency band, and the gyro 34a produces a signal of the angular acceleration in the yawing direction to the arithmetic operation circuit 38a while the gyro 34b produces a signal of the angular acceleration in the pitching direction. The arithmetic operation circuit 38a integrates the received angular acceleration signal twice in the time quadrature process to compute a yawing angle, and the computation result is further added with a predetermined correction signal to generate the command signal of the lens position in the horizontal direction. Similarly, the arithmetic operation circuit 38b integrates the received angular acceleration signal twice in the time quadrature process to compute a pitching angle, and the computation result is added with a predetermined correction signal to generate the command signal of the lens position in the vertical direction. Time-varyingly moving the image stabilizing lens 16 to the positions that are instructed in the lens position command signal produced from the arithmetic operation circuits 38a, 38b on the time-varying basis, an image focused on the film plane F within the camera body 4 can be stabilized.

The command signal of the lens position in the horizontal direction produced from the arithmetic operation circuit 38a is transferred to the differential circuit 44a as the coil position command signal rx related to the actuating coil 20a. Similarly, the command signal of the lens position in the vertical direction produced from the arithmetic operation circuit 38b is transferred to the differential circuit 44b as the coil position command signal $r_Y$ related to the actuating coil 20b. The outputs from the arithmetic operation circuits 38a, 38b are transferred to the arithmetic operation circuit 40, and arithmetic operations as expressed in the formulae (8) enables to generate the coil position command signal $r_V$ for the actuating coil 20c.

On the other hand, the magnetic sensors 24a, 24b, and 24c respectively located inside the actuating coils 20a, 20b, and 20c produce detection signals to the magnetic sensor amplifiers 42a, 42b, and 42c, respectively. The detection signals detected by the magnetic sensors are, after respectively amplified in the magnetic sensor amplifiers 42a, 42b, and 42c, transferred to the differential circuits 44a, 44b, and 44c, respectively.

The differential circuits 44a, 44b, and 44c respectively generate voltages equivalent to the differences between the received detection signals from the magnetic sensors and the coil position command signals $r_X$, $r_Y$, and $r_V$ and respectively permit the currents in proportion to the voltages to flow in the actuating coils 20a, 20b, and 20c. As the currents flow in the actuating coils, the magnetic field in proportion to the currents is developed. By virtue of the magnetic field, the actuating magnets 22, which are disposed in the corresponding positions to the actuating coils, are forced to move closer to the positions designated by the coil position command signals rx, $r_Y$, and rv, respectively. As the actuating magnets 22 are urged by driving force, the steel balls 18 between the movable frame 14 and the fixed plate 12 roll to let the movable frame 14 holding the actuating magnets 22 to smoothly move in the predetermined plane. Simultaneously, since the steel balls 18 roll on the steel ball contacts 31, 32, the resistance force caused by the movement of the movable frame 14 is simply the rolling resistance derived from the steel balls rolling on the contact surfaces, and thus, without frictional resistance of sliding, the movable frame 14 can be smoothly moved by the smallest drive force as possible. Additionally, both the steel balls 18 and the steel ball contacts 31, 32 are made of the material having a high surface hardness, and hence, the rolling resistance between the steel balls 18 and the steel ball contacts 31, 32 can be particularly reduced.

The actuating magnets 22, once reaching the designated positions by virtue of the coil position command signals, the output from the differential circuit turns to the zero level since the coil position command signals are equal to the detection signals, and the force to move the actuating coils also becomes naught. As an external disturbance and/or an alteration in the coil position command signals cause the actuating magnets 22 to depart from the positions designated in the coil position command signals, the current flow is resumed in the actuating coils, which enables the actuating magnets 22 to regain the designated positions.

Time-varyingly repeating the aforementioned step permits the image stabilizing lens 16 attached to the movable frame 14 along with the actuating magnets 22 to follow the lens position command signal to the designated position. Thus, the image focused on the film plane F within the camera body 4 is stabilized.

In the first embodiment of the camera according to the present invention, since the movable frame for the image stabilizing actuator can be moved in the desired direction without using orthogonal guides leading in two different directions, and the actuator may have a simplified mechanism. In this embodiment, also, the movable frame of the image stabilizing actuator can be translated and rotated in a predetermined plane in desired directions.

Furthermore, in the first embodiment of the camera according to the present invention, since the movable frame of the parallel movement apparatus provided in the actuator is supported by the steel balls, substantially no frictional resistance of sliding is caused by the movement of the movable frame, and a small drive force is sufficient to smoothly move the movable frame. Moreover, the simplified mechanism advantageously brings about a lightweight movable frame of the parallel movement apparatus, and this also enables only a small drive force to move the movable frame, thereby resultantly attaining the actuator of quick response.

Although the first embodiment of the present invention has been described, various modifications can be made to it. Especially, the present invention is applied to a film camera in the aforementioned embodiment, but it can be applied to any still camera or animation picture camera, including a digital camera, a video camera, and the like. Also, the present invention can be applied to a lens unit used with a camera body of any of the above-mentioned cameras. Additionally, there are applications of the invention in use as a parallel movement apparatus that moves an image stabilizing lens of the camera or as any other parallel movement apparatuses that move an element such as an XY stage or the like.

Further, in the aforementioned first embodiment, the steel balls are attracted onto the movable frame by virtue of the spherical member attracting magnets attached to the movable frame, but the spherical member attracting magnets may alternatively be attached to the fixed plate while the steel balls are attracted onto the fixed plate.

Moreover, although, in the aforementioned first embodiment, the spherical members or the steel balls are attracted onto the movable frame by the magnetic force, the spherical members may alternatively be attracted onto either the movable frame or the fixed plate by means of electrostatic force or any other forces.

Also, three of the spherical members or the steel balls support the movable frame relative to the fixed plate in the aforementioned first embodiment, but instead, four or more of the spherical members may be used to support the movable frame.

Further, in the aforementioned first embodiment, the actuating coils are attached to the fixed member while the actuating magnets are attached to the movable member, and instead, the actuating magnets may be attached to the fixed member while the actuating coils are attached to the movable member. Also, in the aforementioned first embodiment, three pairs of the actuating coils and the actuating magnets are used, and alternatively, four or more pairs of the actuating coils and the actuating magnets may be employed. Furthermore, in the aforementioned first embodiment, permanent magnets serve as the actuating magnets, and the alternative to them may be electromagnets.

In the aforementioned first embodiment, magnetic sensor serves as the position sensing means to detect magnetic force from the actuating magnets and determine their respective positions, and alternatively, any position sensing sensors but the magnetic sensors may be substituted to detect the relative positions of the actuating magnets to the actuating coils.

Additionally, in the aforementioned first embodiment, the actuating coils are disposed so that pairs of the actuating coils 24a and 24b, 24c and 24a, and 24b and 24c, meet each other at the central angle of 90 degrees, 135 degrees, and 135 degrees, respectively, and alternatively, the position of the actuating coil 24c may be determined so that the central angle at the intersection of the actuating coil 24b with the actuating coil 24c is in the range as expressed in the formula 90+ $\alpha$ (0 $\leqq$ $\alpha$ $\leqq$ 90). Otherwise, the central angle at the intersection of the actuating coils 24a and 24b may be any angle other than 90 degrees as desired, and three of the actuating coils meet one another at the central angle ranging from 90 degrees to 180 degrees such as 120 degrees at all the three central angles made by three of the actuating coils.

Moreover, in the aforementioned first embodiment, the magnetic neutral axes of the actuating magnets extend all in the radial direction, and alternatively, they may be directed in any way as desired. Preferably, at least one of the actuating magnets is disposed with its magnetic neutral axis extended in the radial direction.

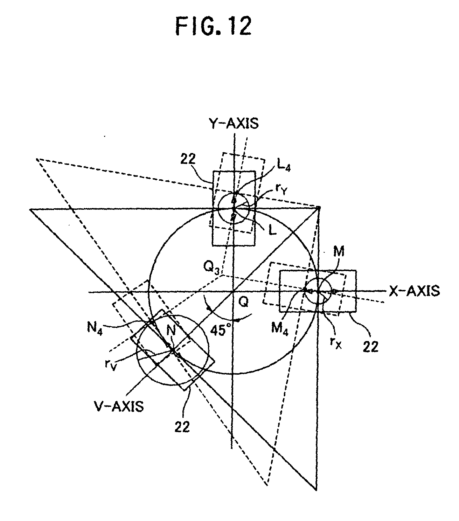

Fig. 12 depicts a modification of the aforementioned first embodiment of the present invention where the magnetic neutral axes of the actuating magnets 22 respectively in pairs with the actuating coils 24a and 24b extend as the tangential line to the circle centered at the point Q while the magnetic neutral line of the remaining magnet 22 in a pair with the actuating coil 24c extends coincidental with a radius of the circle. Although omitted in the drawings, the actuating coils, 24a, 24b, 24c are located in the points L, M and N, respectively. In this example, the coil position command signals $r_X$, $r_Y$, and $r_V$ are produced in relation with the actuating coils 24a, 24b and 24c to instruct where to move those magnets from their respective current positions L, M, and N. Due to the coil position command signals, the midpoints of the magnetic neutral axes of the actuating magnets 22 on the points L, M, N in the case of the movable frame 14 located in its neutral position are shifted to the points $L_4$, $M_4$ and $N_4$, respectively, and simultaneously, the center of the image stabilizing lens 16 is shifted from the point Q to the point $Q_3$.

In this modification, the coil position command signal $r_x$, namely, the horizontal component of the lens position command signal is provided to the actuating coil 24b on the point M while the coil position command signal $r_Y$, namely, the vertical component of the lens position command signal is provided to the actuating coil 24a on the point L. Also, in the case depicted in Fig. 12, substituting the coil position command signals $r_X$ and $r_Y$ for the corresponding terms in the formula (8), the coil position command signal rv thus obtained is given in relation with the actuating coil 24c, which resultantly, causes the point Q to translate by $-r_X$ and $+r_Y$ along the X- and Y-axes, respectively.

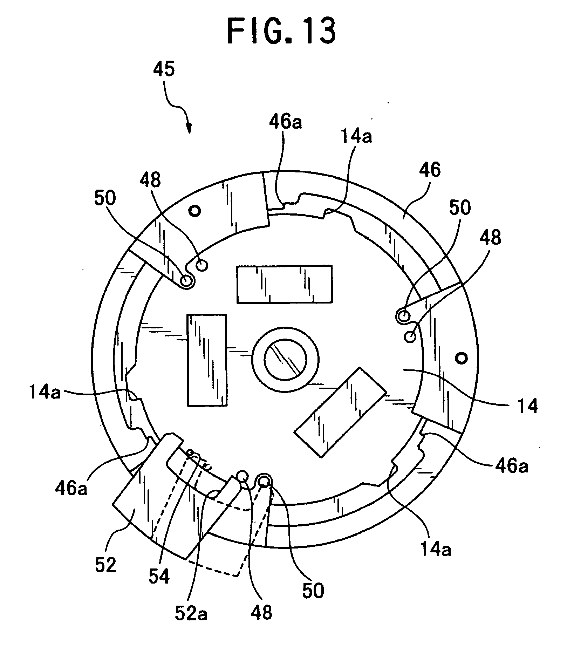

Then, referring to Fig. 13, another modification of the aforementioned first embodiment according to the present invention will be described. This embodiment is different from the aforementioned ones in that an actuator 45 has a locking mechanism anchoring the movable frame 14 to the fixed plate 12 when there is no need of controlling the movable frame 14.

As can be seen in Fig. 13, the actuator 45 in this embodiment is provided with three engagement projections 14a in the outer circumference of the movable frame 14. The fixed plate 12 is also provided with an annular member 46 surrounding the movable frame 14, and the annular member 46 has three engagement elements 46a in the inner circumference thereof so as to mate with the engagement projections 14a, respectively. In addition, the movable frame 14 is provided with three movable member holder magnets 48 in its outer circumference. The annular member 46 has three fixed plate holder magnets 50 in positions corresponding to the movable member holder magnets 48 in the inner circumference, so that both groups of the magnets develop magnetic force and affect each other on the one-on-one basis. Moreover, a manual locking element 52 extends from the outside of the annular member 46 inwardly in the radial direction, and it can move along the circumference direction of the annular member 46. The manual locking element 52 has its tip machined in a U-shaped dent 52a. An engagement pin 54 resides on the outer circumference of the movable frame 14 so that it is received in the U-shaped dent 52a and engaged with the manual locking element 52.

An operation of the actuator 45 will be detailed. First, the movable frame 14 of the actuator 45 is rotated in the counterclockwise direction in Fig. 13, and as a consequence, the engagement projections 14a in the outer circumference of the movable frame 14 respectively come in engagement with the engagement elements 46a in the annular member 46, thereby anchoring the movable frame 14 to the fixed plate 12. Additionally, the movable member holder magnets 48 residing in the movable frame 14 and the fixed member holder magnets 50 in the annular member 46 hardly affect each other in the situation as shown in Fig. 13. As the movable frame 14 is rotated in the counterclockwise direction and carries the movable member holder magnets 48 closer to the fixed member holder magnets 50, the fixed member holder magnets 50 applies magnetic force to the movable frame 14 to rotate it in the clockwise direction. Repelling the magnetic force, the movable frame 14 is further rotated in the counterclockwise direction till the movable member holder magnets 48 pass by the fixed member holder magnets 50, and consequently, the fixed member holder magnets 50 applies magnetic force to the movable frame 14 to rotate it in the counterclockwise direction. The magnetic force urges the engagement projections 14a to press themselves against the engagement elements 46a, and thus, the engagement projections 14a and the engagement elements 46a remain mated with each other. In this way, during stopping the power supply to the actuator 45, the stable engagement of the engagement projections 14a and the engagement elements 46a is guaranteed, the movable frame 14 being anchored to the fixed plate 12.

When the manual locking element 52 is manually rotated in the counterclockwise direction in Fig. 13, the engagement pin 54 on the movable frame 14 is hooked in the U-shaped dent 52a, and the movable frame 14 is also rotated in the counterclockwise direction. In this manner, the engagement projections 14a and the engagement element 46a can be manually get tied with each other. When the manual locking member 54 is manually rotated reversely, or in the clockwise direction, the movable frame 14 is rotated in the clockwise direction, and this force the engagement projections 14a and the engagement elements 46a to disconnect from each other.

The actuator in this embodiment is capable of rotating the movable frame, and this facilitates the implementation of the locking mechanism as in this modification.

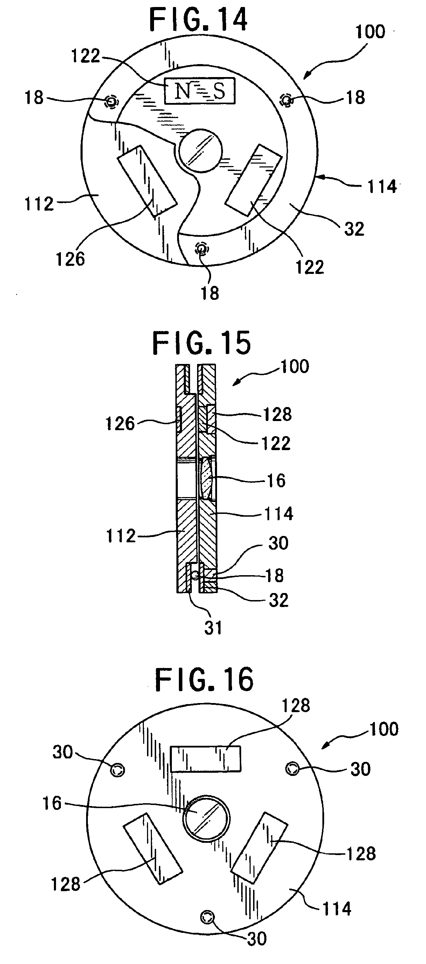

Now, referring to Fig. 14 to Fig. 16, second embodiment of the parallel movement apparatus according to the present invention will be explained. The parallel movement apparatus of the present invention is almost similar to that in the first embodiment except that it has no equivalent means to the drive means of the actuator used in the camera of the first embodiment. Thus, hereinafter, only different components from those in the first embodiment will be described, and like reference numerals denote the same components of which descriptions are omitted.

Figs. 14, 15 and 16 are a frontal partial sectional view, a side sectional view, and a rear view, showing a parallel movement apparatus 100, respectively. Fig. 14 depicts the parallel movement apparatus 100 viewed on the side of a fixed plate 112, illustrating the fixed plate 112 partially cut away, and simply for the convenience of understanding, this view is referred to as the "frontal view" hereinafter.

As will be recognized in Figs. 14 to 16, the parallel movement apparatus 100 has the fixed plate 112 or a fixed member, a movable frame 114 or a movable member movably supported relative to the fixed plate 112, and three steel balls 18 that are spherical members supporting the movable frame 114. The movable frame 114 has an image stabilizing lens 16 attached to its center. The parallel movement apparatus 100 further includes steel ball attracting magnets 30 attracting the steel balls 18, steel ball contacts 31, 32 mounted on the fixed plate 112 and the movable frame 114, respectively. In addition, the parallel movement apparatus 100 is also provided with three holding magnets 122, three attracting yokes 126 mounted on the fixed plate 112 in positions corresponding to the holding magnets 122, and three back yokes 128 respectively mounted on reverse sides of the holding magnets 122 to effectively propagate the magnetic flux from the same toward the corresponding attracting yokes 126. The holding magnets 122, the attracting yokes 126 and the back yokes 128 together work cooperatively as a movable member attracting means.

The holding magnets 122, the attracting yokes 126 and the back yokes 128 are respectively disposed on a first circle on the fixed plate 112 and the movable frame 114, separated from each other at an interval of the 120-degree central angle. The holding magnets 122, the attracting yokes 126, and the back yokes 128 are rectangular plates that are all dimensioned and shaped approximately the same, having their respective longer sides positioned in parallel with the tangential lines to the first circle. As can be seen in Fig. 15, the holding magnets 122, the attracting yokes 126, and the back yokes 128 are superposed one another, and therefore, the back yokes 128 serves to let the magnetic flux from the holding magnets 122 effectively propagate toward the attracting yokes 126, which enables the movable frame 114 to be attracted onto the fixed plate 112.

Three of the spherical member attracting magnets 30 are disposed on the movable frame 114, separated from each other in a second circle outer from the first circle at an angular interval of 120-degree central angle. Moreover, as can be seen in Fig. 16, three of the spherical member attracting magnets 30 are respectively in midpoints between pairs of the adjacent holding magnets 122, separated by 60-degree central angle from the holding magnets 122 that are also disposed at the same angular interval. Three of the steel balls 18 are attracted by the spherical member attracting magnets 30 and set in positions just as those magnets are located. The spherical member attracting magnets 30 permit the steel balls 18 to be attracted onto the movable frame 114 while the movable frame 114 is attracted onto the fixed plate 112 by the magnetic flux from the holding magnets 122, and hence, the steel balls 18 are sandwiched between the movable frame 114 and fixed plate 112.

In practically using the parallel movement apparatus in the second embodiment of the present invention, an arbitrary actuating means applies a drive force to the movable frame 114 to let it move in a plane in parallel with the fixed plate 112. Simultaneously, the steel balls 18 rolling on the steel ball contacts 31, 32 enable the movable frame 114 to move relative to the fixed plate 112. Since the movable frame 114 are supported by three of the steel balls 18, simply the rolling resistance derived from the steel balls 18 slightly affects the movable frame 114 but almost no frictional resistance of sliding does.

With the second embodiment of the parallel movement apparatus according to the present invention, almost no frictional resistance of sliding is caused against the movement of the movable frame, and hence, a small drive force is sufficient to move the movable frame.

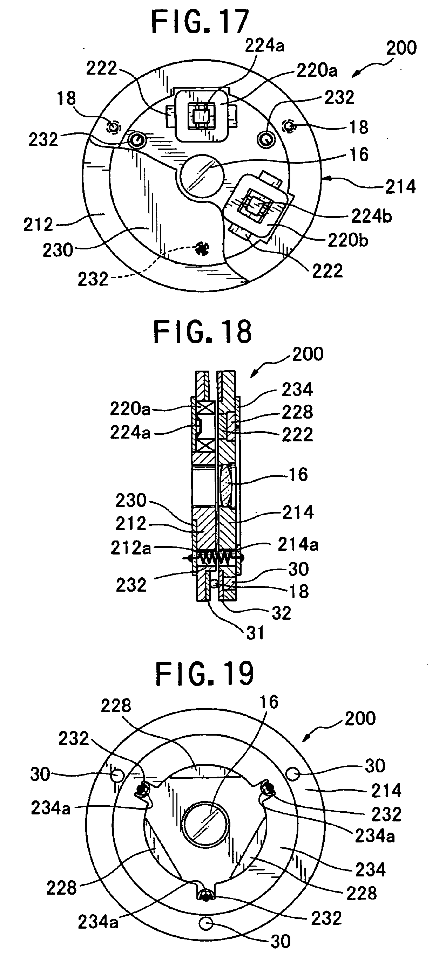

Now, referring to Figs. 17 to 19, still another embodiment or a third embodiment of an actuator according to the present invention will be described. This embodiment of the actuator is almost equivalent to the actuator used in the camera in the first embodiment except that elasticity of an elastic element enables the movable frame to be attracted onto the fixed plate. Thus, hereinafter, only different components from those in the first embodiment will be described, and like reference numerals denote the similar components of which descriptions are omitted.

Figs. 17, 18 and 19 are front partial sectional view, a side sectional view, and a rear view, respectively illustrating the actuator 200. Fig. 17 depicts the actuator 200 viewed on the side closer to the fixed plate 212 which is partially cut out, and hereinafter, this view is referred to as a "frontal view".

As will be recognized in Figs. 17 to 19, the actuator 200 has the fixed plate 212 or a fixed member, a movable frame 214 or a movable member movably carrying the image stabilizing lens 16, and three steel balls 18 that are spherical members. The actuator 200 further includes magnets 30 serving as a spherical member attracting means, steel ball contacts 31, 32 mounted on the fixed plate 212 and the movable frame 214, respectively. Three of the steel balls 18 together work as a movable member supporting means while the steel ball contacts 31, 32 respectively constitute the flat supporting surfaces of the fixed member and the movable member.

The actuator 200 is also provided with three actuating coils 220a, 220b, 220c (220c is not shown), three actuating magnets 222 respectively located in positioned corresponding to the actuating coils (only two of the magnets are shown), and magnetic sensors 224a, 224b, 224c respectively located inside the actuating coils so as to serve as position sensing means (the sensor 224c alone is not shown). The actuator 200 has back yokes 228 mounted on reverse sides of the actuating magnets 222 so as to effectively propagate the magnetism from them toward the fixed plate 212. The actuating coils and the actuating magnets cooperatively work as an actuating means for translating and rotating the movable frame 214 relative to the fixed plate 212.

As will be recognized in Fig. 17, the steel balls 18 are disposed on the outer circle from the one in which the actuating coils on the fixed plate 212 are located. Three of the steel balls 18 are separated from each other at an angular interval of 120-degree central angle, in midpoints between pairs of the adjacent actuating coils. As shown in Fig. 18, the steel balls 18 are attracted onto the movable frame 214 by means of the spherical member attracting magnets 30 embedded in the movable frame 214 in positions so as to be superposed with the steel balls 18. The steel balls 18 are sandwiched between the movable frame 214 and the fixed plate 212. In this way, the movable frame 214 is held in a plane in parallel with the fixed plate 212, and the steel balls 18 rolling between both the members permit the movable frame 214 to translate and rotate in the arbitrary direction relative to the movable plate 212.

Additionally, the annular steel ball contacts 31, 32 are provided in the outer peripheries of the fixed plate 212 and the movable frame 214, respectively, so as to be in contact with the steel balls 18. If, with the steel balls 18 being sandwiched between the fixed plate 212 and the movable frame 214, the movable frame 214 is moved, then this causes the steel balls 18 to roll between the steel ball contacts 31, 32. Hence, while the movable frame 214 is moving relative to the fixed plate 212, no slide friction is caused between them.

The fixed plate 212 is approximately like a doughnut or a disk in shape, and an almost doughnut-like fixed plate substrate 230 is provided concentric with the fixed plate. Similarly, the movable frame 214 is also shaped approximately like a doughnut or a disk, and an almost doughnut-like movable frame substrate 234 is attached to the movable frame, concentric with the same. As shown in Fig. 18, in the circles of the fixed plate 212 and the movable frame 214, three pairs of through-holes 212a, 214a are provided at an angular interval of 120-degree central angle, and both the through-holes 212a, 214a are aligned with each other to thoroughly be indiscrete. Inside the indiscrete through-holes 212a, 214a, there are elastic springs 232 are provided.

Each of the spring 232 has its one end linearly extend along the axial direction and the other end bent in a hook. The linear end of each spring 232 is inserted in a small hole defined in position corresponding to each of the through-holes 212a in the fixed plate substrate 230 and soldered to the fixed plate substrate 230. On the other hand, the hooked end of the spring 232 is hitched by a claw 234a formed in position corresponding to each of the through-holes 214a defined in the movable frame substrate 234, and is soldered to the movable frame substrate 234. The hooked end of each of the springs 232 is expanded and then hitched by the claw 234a, and therefore, the movable frame 214 is pulled toward the fixed plate 212 by the elastic force of the spring 232 as if it were attracted onto the fixed plate. In this manner, the steel balls 18 is sandwiched between the fixed plate 212 and the movable frame 214. The pairs of the through-holes 212a, 214a are dimensioned sufficiently large so that the spring 232 would never touch the inner wall of each pair of the through-holes 212a, 214a while the movable frame 214 is translating relative to the fixed plate 212 without exceeding a range of its practical use. In addition, the movable frame substrate 234 attached to the movable frame 214 and the fixed plate substrate 230 attached to the fixed plate 212 are linked to each other by the springs 232, and hence, the springs 232 may also be used as conductors transmitting electrical signals between the fixed plate substrate 230 and the movable frame substrate 234.

Operation of the third embodiment of the actuator 200 according to the present invention are similar to those of the actuator 10 employed in the first embodiment of the present invention except that the movable frame 214 is attracted onto the fixed plate 212 by means of the springs 232, and therefore, details about them are omitted.

With the actuator of the third embodiment according to the present invention, almost no frictional resistance is caused against the movement of the movable frame, and thus, a small drive force is sufficient to move the movable frame.

[BRIEF DESCRIPTIONS OF THE DRAWINGS]

Fig. 1 is a sectional view of a first embodiment of a camera according to the present invention;
Fig. 2 is a partially cut-out frontal partial sectional view showing an actuator used in the first embodiment of the camera according to the present invention;
Fig. 3 is a cross-sectional view taken along the line A-A in Fig. 2, showing the actuator used in the first embodiment of the camera according to the present invention;
Figs. 4 is a partial sectional view showing an upper portion of the actuator used in the embodiment of the camera according to the present invention;
Figs. 5(a) and 5(b) are partially enlarged top plan and frontal views illustrating mutual positional relations of actuating coils, actuating magnets, back yokes, and attracting yokes;
Figs. 6 and 7 are diagrams illustrating a relation between the movement of the actuating magnet and the signals generated by the magnetic sensor;
Fig. 8 is a block diagram illustrating the signal process on the controller;
Fig. 9 is a diagram illustrating a positional relation of the actuating coils disposed on the fixed plate and three actuating magnets disposed on the movable frame;
Fig. 10 is a diagram illustrating coil position command signals upon translating and rotating the movable frame;
Fig. 11 is a circuit diagram showing an example of a circuit controlling current to let it flow in the actuating coils;
Fig. 12 is a modification of the first embodiment of the actuator according to the present invention;
Fig. 13 is another modification of the first embodiment of the actuator according to the present invention;
Fig. 14 is a partially cut-out front partial sectional view showing second embodiment of a parallel movement apparatus according to the present invention;
Fig. 15 is a side sectional view showing the second embodiment of the parallel movement apparatus;
Fig. 16 is a rear view showing the second embodiment of the parallel movement apparatus;
Fig. 17 is a partially cut-out frontal partial sectional view showing third embodiment of the actuator according to the present invention;
Fig. 18 is a side sectional view showing the third embodiment of the actuator according to the present invention; and
Fig. 19 is a rear view showing the third embodiment of the actuator according to the present invention.

**Claims**

1.  An actuator comprising
    a fixed member (12),
    a movable member (14),
    at least three spherical members (18) disposed between flat supporting surfaces (31, 32) of the fixed member and the movable member so as to support the movable member in parallel with the fixed member, **characterised in that** it comprises
    a spherical member attracting means (30) for attracting the spherical members onto the flat supporting surface of the fixed member or that of the movable member,
    at least three actuating coils (20a, 20b, 20c) attached to either one of the fixed member (12) and the movable member (14),
    actuating magnets (22) attached to the remaining one of the fixed member (12) and the movable member (14) in positions corresponding to the actuating coils, and

a position sensing means (24a, 24b, 24c) for detecting relative positions of the actuating magnets (22) to the actuating coils (20a, 20b, 20c), and

a control means (36), for producing a coil position command signal on the basis of a command signal to instruct where the movable member is to be moved and for controlling the drive current to flow in each of the actuating coils in response to the coil position command signal and the position data detected by the position sensing means.

2. A lens unit (2) comprising:

a lens barrel (6),
a photographing lens (8) housed in the lens barrel (6),
an actuator according to claim 1,
wherein the fixed member (12) is secured inside of the lens barrel (6), and
the movable member (14) carries an image stabilizing lens (16),
a vibration sensing means (34a, 34b) for detecting vibrations of the lens barrel, and
a lens position command signal generating means for producing a lens position command signal to instruct where the image stabilizing lens is to be moved on the basis of a detection signal from the vibration sensing means,
wherein the control means is adapted to produce the coil position command signal related to the actuating coils on the basis of the lens position command signal from the lens position command signal generating means and controlling drive current to flow in the actuating coils in response to the coil position command signal and the position data detected by the position sensing means.

3. A camera having the lens unit according to claim 2.


**Patentansprüche**

1. Aktuator, der aufweist:

ein festes Element (12),
ein bewegliches Element (14),
wenigstens drei kugelförmige Elemente (18), die zwischen flachen Halteflächen (31, 32) des festen Elements und des beweglichen Elements angeordnet sind, um das bewegliche Element parallel zu dem festen Element zu halten, **dadurch gekennzeichnet, dass** er aufweist:

ein Anziehungsmittel (30) für kugelförmige Elemente zum Anziehen der kugelförmigen Elemente auf der flachen Haltefläche des festen Elements oder der des beweglichen Elements,
wenigstens drei Betätigungsspulen (20a, 20b, 20c), die an dem festen Element (12) oder dem beweglichen Element (14) angebracht sind,
Betätigungsmagnete (22), die an dem übrigen, dem festen Element (12) oder dem beweglichen Element (14), an Positionen angebracht sind, die den Betätigungsspulen entsprechen, und
ein Positionsabtastmittel (24a, 24b, 24c) zum Erfassen von Relativpositionen der Betätigungsmagnete (22) zu den Betätigungsspulen (20a, 20b, 20c), und
ein Steuermittel (36) zum Erzeugen eines Spulenpositionsbefehlssignals auf der Basis eines Befehlssignals, um anzuweisen, wohin das bewegliche Element bewegt werden soll, und um den Antriebsstrom, der in jeder der Betätigungsspulen fließen soll, ansprechend auf das Spulenpositionsbefehlssignal und die von dem Positionsabtastbefehlssignal erfassten Positionsdaten zu steuern.

2. Linseneinheit (2), die aufweist:

einen Objektivtubus (6),
ein Aufnahmeobjektiv (8), das in dem Objektivbus (6) untergebracht ist,
einen Aktuator nach Anspruch 1,
wobei das feste Element (12) im Inneren des Objektivtubus (6) befestigt ist, und
das bewegliche Element (14) eine Bildstabilisierungslinse (16) trägt,
ein Vibrationsabtastmittel (34a, 34b) zum Erfassen von Vibrationen des Objektivtubus, und
ein Erzeugungsmittel für das Linsenpositionsbefehlssignal zum Erzeugen eines Linsenpositionsbefehlssignals, um auf der Basis eines Erfassungssignals von dem Vibrationsabtastmittel anzuweisen, wo die Bildstabilisierungslinse hin bewegt werden soll,

wobei das Steuermittel geeignet ist, das die Betätigungsspulen betreffende Spulenpositionsbefehlssignal auf der Basis des Linsenpositionsbefehlssignals von dem Erzeugungsmittel für das Linsenpositionsbefehlssignal zu erzeugen und den Antriebsstrom, der in den Betätigungsspulen fließen soll, ansprechend auf das Spulenpositionsbefehlssignal und die von dem Positionsabtastmittel erfassten Daten zu steuern.

**3.** Kamera mit der Linseneinheit nach Anspruch 2.

## Revendications

**1.** Actionneur comprenant :

un élément fixe (12),
un élément mobile (14),
au moins trois éléments sphériques (18) disposés entre des surfaces de support planes (31, 32) de l'élément fixe et de l'élément mobile afin de supporter l'élément mobile parallèlement à l'élément fixe, **caractérisé en ce qu'**il comprend :

un moyen d'attraction d'élément sphérique (30) destiné à attirer les éléments sphériques contre la surface de support plane de l'élément fixe ou celle de l'élément mobile,
au moins trois bobines d'actionnement (20a, 20b, 20c) fixées à l'un ou l'autre de l'élément fixe (12) et de l'élément mobile (14),
des aimants d'actionnement (22) fixés à celui qui reste de l'élément fixe (12) et de l'élément mobile (14) à des positions correspondant aux bobines d'actionnement, et
un moyen de détection de position (24a, 24b, 24c) destiné à détecter des positions relatives des aimants d'actionnement (22) par rapport aux bobines d'actionnement (20a, 20b, 20c), et
un moyen de commande (36) destiné à produire un signal de commande de position de bobine sur la base d'un signal de commande ordonnant la position vers laquelle l'élément mobile doit être déplacé et destiné à commander le courant d'attaque devant passer dans chacune des bobines d'actionnement en réponse au signal de commande de position de bobine et aux données de position détectées par le moyen de détection de position.

**2.** Unité à lentilles (2) comprenant :

un barillet de lentille (6),
une lentille de photographie (8) logée dans le barillet de lentille (6),
un actionneur selon la revendication 1,
dans lequel l'élément fixe (12) est fixé à l'intérieur du barillet de lentille (6), et
l'élément mobile (14) porte une lentille de stabilisation d'image (16),
un moyen de détection de vibrations (34a, 34b) destiné à détecter des vibrations du barillet de lentille, et
un moyen générateur de signal de commande de position de lentille destiné à produire un signal de commande de position de lentille pour ordonner la position vers laquelle la lentille de stabilisation d'image doit être déplacée sur la base d'un signal de détection provenant du moyen de détection de vibrations,
dans lequel le moyen de commande est apte à produire le signal de commande de position de bobine par rapport aux bobines d'actionnement sur la base du signal de commande de position de lentille provenant du moyen générateur de signal de commande de position de lentille et à commander le courant d'attaque devant passer dans les bobines d'actionnement en réponse au signal de commande de position de bobine et aux données de position détectées par le moyen de détection de position.

**3.** Dispositif de prise de vue comportant l'unité à lentilles de la revendication 2.

# FIG. 1

EP 1 659 435 B1

# FIG. 2

# FIG. 3

# FIG. 4

# FIG. 5A

# FIG. 5B

# FIG. 6

Y-AXIS DIRECTION

X-AXIS DIRECTION

FIG. 7A

FIG. 7B

FIG. 7C

FIG. 7D

FIG. 7E

FIG. 7F

# FIG. 8

EP 1 659 435 B1

# FIG. 9

# FIG. 10

# FIG. 11

EP 1 659 435 B1

FIG. 12

# FIG. 13

## FIG. 14

## FIG. 15

## FIG. 16

# FIG. 17

# FIG. 18

# FIG. 19

**EP 1 659 435 B1**

**REFERENCES CITED IN THE DESCRIPTION**

**Patent documents cited in the description**

- JP H03186823 B
- JP 61294216 A
- US 2002112543 A